# EUROPÄISCHE PATENTSCHRIFT

(11) **EP 1 620 233 B1**
(45) Veröffentlichungstag und Bekanntmachung des Hinweises auf die Patenterteilung: **21.02.2007**
(21) Anmeldenummer: 03785561.6
(22) Anmeldetag: 11.12.2003
(51) Int. Cl.: B25F 5/00, H01M 2/10

(54) **ELEKTRISCHE HANDWERKZEUGMASCHINE MIT AKKUPACK**
ELECTRICAL HAND TOOL MACHINE WITH AN ACCUMULATOR PACK
MACHINE-OUTIL MANUELLE ELECTRIQUE COMPORTANT UN BLOC D'ACCUMULATEUR

(30) Priorität: 26.04.2003 DE 10318947
(43) Veröffentlichungstag der Anmeldung: 01.02.2006
(73) Patentinhaber: ROBERT BOSCH GMBH, 70442 Stuttgart (DE)
(72) Erfinder: HOFMANN, Albrecht, 71144 Steinenbronn (DE); KRONDORFER, Harald, Chicago, IL 606046 (US); HECKMANN, Markus, 70771 Leinfelden-Echterdingen (DE); SCHADOW, Joachim, 72135 Dettenhausen (DE); SCHOMISCH, Thomas, 70771 Leinfelden-Echterdingen (DE)
(74) Vertreter: Gleiss & Grosse
(86) Internationale Anmeldenummer: PCT/DE2003/004103
(87) Internationale Veröffentlichungsnummer: WO 2004/096500

(56) Entgegenhaltungen:
- EP-A- 0 804 985
- EP-A- 1 260 321
- JP-A- 10 296 660

## Beschreibung

Die Erfindung betrifft eine elektrische Handwerkzeugmaschine gemäß dem Oberbegriff des Anspruchs 1. Eine solche Vorrichtung ist in JP 10 29 6660 offenbart.

### Stand der Technik

Elektrische Handwerkzeugmaschinen, wie zum Beispiel Schlagschrauber, Bohrmaschinen, Winkelschleifer, Stichsägen, Kreissägen oder Hobelmaschinen für den Handwerker- oder Heimwerkerbedarf weisen als Antriebsmotor gewöhnlich entweder einen Wechselstrommotor oder einen Gleichstrommotor auf. Während der erstere in der Regel über ein Netzkabel mit Wechselstrom aus dem Netz gespeist wird, stammt die elektrische Energie zur Versorgung des Gleichstrommotors in der Regel aus einem sogenannten Akkupack, einem wiederaufladbaren Akkumulator in einem mit dem Gehäuse der Handwerkzeugmaschine kuppelbaren Gehäuse, der beim Kuppeln der beiden Gehäuse elektrisch an die Stromzufuhrleitungen des Gleichstrommotors angeschlossen wird. Zum Kuppeln der beiden Gehäuse der Handwerkzeugmaschine und des Akkupacks ist gewöhnlich das letztere mit einer überstehenden Verrastungsvorrichtung versehen, die in eine komplementäre Einsteckbuchse der ersteren eingeschoben und in dieser verrastet wird.

Um ein sicheres Verrasten der Handwerkzeugmaschine und des Akkupacks zu gewährleisten, muss jedoch üblicherweise zwischen der überstehenden Verrastungsvorrichtung der einen Komponente und der komplementären Einsteckbuchse der anderen Komponente ein gewisses Spiel vorhanden sein. Dieses Spiel hat zur Folge, dass es beim Betrieb der Handwerkzeugmaschine aufgrund von betriebsbedingten Vibrationen und der Trägheit des Akkupacks zum Auftreten von Relativbewegung zwischen dem Akkupack und dem Gehäuse der Handwerkzeugmaschine kommt. Im Zusammenspiel mit Umgebungseinflüssen, zum Beispiel Staub, können diese Relativbewegungen zu einem Verschleiß von Rastelementen der Verrastungsvorrichtung und damit zu einer Vergrößerung des Spiels bis hin zu einem Ausfall der Verrastung führen.

Aus der JP 10 296660 ist bereits eine Handwerkzeugmaschine der eingangs genannten Art bekannt, bei der am unteren Rand eines im Griffteil der Handwerkzeugmaschine vorgesehenen Akkupack-Aufnahmeschachts zwei elastische Körper angeordnet sind, die an ihrer Unterseite überstehende, durch Aussparungen getrennte Erhebungen aufweisen. Diese können beim Auftreten von Schwingungen in Längsrichtung des Griffteils in die Aussparungen ausweichen, wenn sie unter Verformung zusammengedrückt werden. Jedoch ermöglichen derartige elastische Körper in der Hauptschwingungsrichtung der Handwerkzeugmaschine keine besonders gute Schwingungsdämpfung und verschleißen darüber hinaus relativ schnell.

### Vorteile der Erfindung

Die erfindungsgemäße Handwerkzeugmaschine mit den Merkmalen des Anspruchs 1 weist demgegenüber den Vorteil auf, dass das zwischen dem Akkupack und dem Gehäuse der Handwerkzeugmaschine vorhandene mindestens eine Feder-/Dämpfungselement durch seine Dämpfungseigenschaft vibrationsbedingte Relativbewegungen zwischen dem Akkupack und dem Gehäuse in der Hauptschwingungsrichtung der Handwerkzeugmaschine dämpft und durch seine Federeigenschaft zugleich das verrastungsbedingt zwischen diesen Komponenten vorhandene Spiel beseitigt. Die durch die Dämpfung bewirkte Absorption eines großen Teils der von der Handwerkzeugmaschine auf den Akkupack übertragenen Vibrationsenergie sowie die durch die Reduzierung des Spiels bewirkte Verkürzung von Schwingungsamplituden der vibrationsbedingten Relativbewegungen haben zur Folge, dass ein vibrationsbedingter Verschleiß der Rastelemente weitgehend vermieden bzw. stark vermindert werden kann. Darüber hinaus wird bei verrastetem Akkupack durch das fehlende Spiel zwischen diesem und dem Gehäuse der Handwerkzeugmaschine eine sehr hochwertige Gesamtanmutung der Handwerkzeugmaschine erreicht.

Da das am Gehäuse oder am Akkupack angebrachte Feder-/Dämpfungselement mit einer im Wesentlichen senkrecht zu einer Hauptschwingungsrichtung der Handwerkzeugmaschine ausgerichteten Oberfläche der jeweils anderen Komponente in Berührungseingriff tritt und bevorzugt in einer Richtung verformbar ist, die dieser Hauptschwingungsrichtung entspricht, können unerwünschte Relativbewegungen zwischen dem Akkupack und dem Gehäuse der Handwerkzeugmaschine in dieser Richtung wirkungsvoll verhindert werden. Die Hauptschwingungsrichtung entspricht zum Beispiel bei einem Schwingschleifer dessen Schwingungsrichtung, während sie bei einem Schlagbohrschrauber in Richtung der Bohrachse ausgerichtet ist, was bedeutet, dass die Anordnung der Feder-/Dämpfungselemente bei verschiedenen Werkzeugmaschinen unterschiedlich sein kann.

Das Feder-/Dämpfungselement oder die Feder-/Dämpfungselemente können wahlweise an einer der beiden Komponenten, das heißt am Gehäuse der Handwerkzeugmaschine oder am Akkupack, vorgesehen sein und beim Verrasten der beiden Komponenten mit der jeweils anderen Komponente in Berührungseingriff treten. Vorzugsweise werden das Feder-/Dämpfungselement oder die Feder-/Dämpfungselemente jedoch an der mit der Einsteckbuchse versehenen Komponente, das heißt in der Regel dem Gehäuse der Handwerkzeugmaschine, vorgesehen, weil sie im Inneren dieser Einsteckbuchse besser vor Beschädigungen geschützt sind als an der überstehenden Verrastungsvorrichtung der anderen Komponente. Außerdem macht eine Anbringung der Feder-/Dämpfungselemente an der Werkzeugmaschine ohne Beeinträchtigung der Dämpfungseigenschaften eine Verwendung baugleicher Akkupacks für unterschiedliche Werkzeugmaschinen möglich.

Das Feder-/Dämpfungselement oder die Feder-/Dämpfungselemente bestehen vorzugsweise aus einem gummielastisch verformbaren Material, das sowohl dämpfende als auch federnde Eigenschaften aufweist. Beispiele für ein solches Material sind unter anderem Natur- oder Synthesekautschuk, Silikonkautschuk, reversibel verformbarer weichen Schaumstoff oder ein anderes Elastomer. Eine besonders kostengünstige Herstellung der Handwerkzeugmaschine wird erreicht, wenn das Feder-/Dämpfungselement oder die Feder-/Dämpfungselemente aus einem thermoplastischen Elastomer hergestellt und bei der Fertigung des Gehäuses der Handwerkzeugmaschine an der bzw. den vorgesehenen Stellen einstückig mit den entsprechenden Teilen des Gehäuses geformt bzw. an diese angeformt werden. Diese Lösung ist insbesondere dann von Vorteil, wenn das Gehäuse weitere Teile aus thermoplastischem Elastomer aufweist, zum Beispiel einen sogenannten Softgrip an seinem Griffteil, die dann zusammen mit den Feder-/Dämpfungselementen in einem Arbeitsgang in 2K-Technik direkt am Gehäuse angespritzt werden können.

Alternativ dazu können jedoch auch ein oder mehrere Federelemente zur Beseitigung des Spiels mit einem oder mehreren Dämpfungselementen zur Minderung von Relativbewegungen kombiniert werden, wobei es in diesem Fall grundsätzlich auch möglich ist, die Federelemente an anderen Stellen als die Dämpfungselemente vorzusehen. Beispielsweise können ein oder mehrere, aus einem federelastischen Material, zum Beispiel Federstahl, hergestellte und in Form einer Blatt- oder Spiralfeder zwischen dem Gehäuse der Handwerkzeugmaschine und dem Akkupack angebrachte Federelemente in Kombination mit einem oder mehreren plastisch verformbaren. Dämpfungselementen, wie beispielsweise Gelkissen oder dergleichen, verwendet oder die Elastizität der Federelemente durch geeignete Dämpfungselemente gedämpft werden.

Vorzugsweise sind mehrere Feder-/Dämpfungselemente im Abstand voneinander angeordnet, um an allen Seiten des Akkupacks bzw. der Handwerkzeugmaschine für einen gleichmäßigen Spielausgleich zu sorgen. Ein besonders guter Spielausgleich in den beiden hauptsächlichen Bewegungsrichtungen des Akkupacks in Bezug zur Handwerksmaschine wird erreicht, wenn zumindest ein Teil der Feder-/Dämpfungselemente in Richtungen federnd verformbar ist, die zu den Seitenwänden des Akkupacks parallel bzw. zu einer Richtung eines Ausweichens von Rastelementen beim Verrasten von Akkupack und Gehäuse senkrecht ausgerichtet sind.

### Zeichnungen

Die Erfindung wird nachfolgend in einem Ausführungsbeispiel anhand der zugehörigen Zeichnungen näher erläutert. Es zeigen:

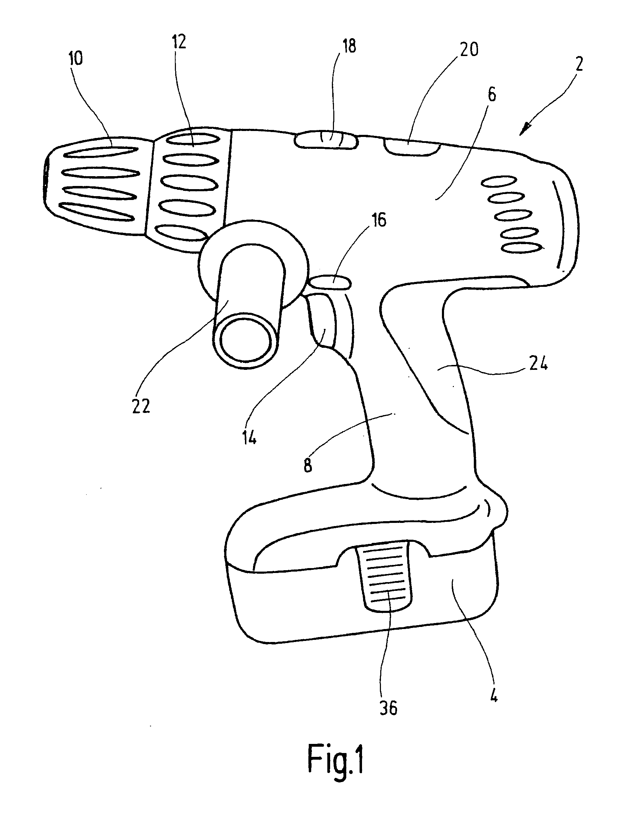

- Figur 1: eine perspektivische Ansicht eines elektrischen Schlagbohrschraubers mit Akkupack;
- Figur 2: eine perspektivische Ansicht des vom Schlagbohrschrauber abgenommenen Akkupacks;
- Figur 3: eine teilweise geschnittene Unterseitenansicht eines Griffteils des Schlagbohrschraubers bei abgenommenem Akkupack.

### Beschreibung des Ausführungsbeispiels

Der in der Zeichnung dargestellte elektrische Schlagbohrschrauber 2 mit Akkupack 4 besteht im Wesentlichen aus einem Gehäuse 6 mit einem Griffteil 8, einem im Gehäuse 6 untergebrachten Elektromotor mit Untersetzungsgetriebe (nicht dargestellt), einem über das Gehäuse 6 überstehenden und vom Untersetzungsgetriebe angetriebenen Schnellspannbohrfutter 10 zum Einspannen eines Bohrers oder eines Schraubeinsatzes (nicht dargestellt), einem zwischen dem Schnellspannbohrfutter 10 und dem Gehäuse 6 angeordneten Drehmomenteinstellring 12 sowie dem lösbar mit dem unteren Ende des Griffteils verrasteten Akkupack 4 zur netzunabhängigen Versorgung des Elektromotors mit Gleichstrom.

Das Gehäuse 6 des Schlagbohrschraubers 2 ist am oberen Ende des Griffteils 8 mit einem Ein-/Aus-Schalter 14 sowie einem Drehrichtungsumkehrschalter 16 mit Einschaltsperre versehen und weist auf seiner Oberseite einen Schalter 18 für den 1. und 2. Gang sowie eine Magnetplatte 20 auf. An einer Seite des Gehäuses 6 ist ein Zusatzhandgriff 22 lösbar befestigt. Der Griffteil 8 ist an seiner vom Ein-/Aus-Schalter 14 abgewandten Seite mit einem sogenannten Softgrip 24 versehen, das heißt einem bei der Fertigung des Gehäuses 6 in 2K-Technik am Griffteil 8 angespritzten Polster oder Kissen aus einem thermoplastischen Elastomermaterial.

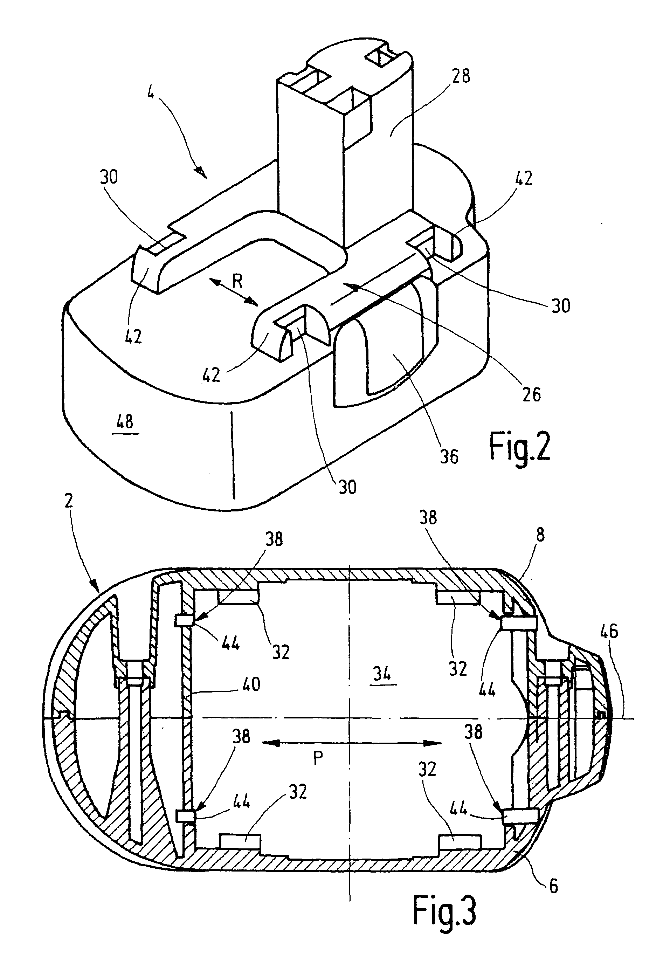

Wie am besten in Figur 2 dargestellt, ist der vom Schlagbohrschrauber 2 getrennte Akkupack 4 auf seiner Oberseite mit einer im Wesentlichen U-förmigen Verrastungsvorrichtung 26 und einem nach oben über die Verrastungsvorrichtung 26 überstehenden Kontaktsockel 28 versehen. Die Verrastungsvorrichtung 26 umfasst vier Rastelemente 30, die mit entsprechenden Rastnasen 32 in einer zum Einführen der Verrastungsvorrichtung 26 und des Kontaktsockels 28 dienenden Einsteckbuchse 34 an der Unterseite des Griffteils 8 des Gehäuses 6 (vgl. Figur 3) in Eingriff treten, wenn der Akkupack 4 am Griffteil 8 des Gehäuses 6 befestigt wird. Zum Lösen des Akkupacks 4 vom Griffteil 8 können die Rastelemente 30 mit Hilfe zweier an entgegengesetzten Breitseitenflächen des Akkupacks 4 vorgesehener Drucktaster 36 aus dem Eingriff mit den Rastnasen 32 ausgerückt werden.

Wie am besten in Figur 3 dargestellt, ist das Gehäuse 6 des Schlagbohrschraubers 2 im Inneren der zum Einführen der Verrastungsvorrichtung 26 und des Kontaktsockels 28 des Akkupacks 4 dienenden Einsteckbuchse 34 mit insgesamt vier Feder-/Dämpfungselementen 38 versehen. Die Aufgabe dieser Dämpfungselemente 38 ist es, das nach dem Verrasten des Akkupacks 4 in der Einsteckbuchse 34 zwisehen dem Akkupack 4 und dem Gehäuse 6 vorhandene Spiel zu minimieren und für eine Dämpfung der vom Gehäuse 6 auf den Akkupack 4 übertragenen Vibrationen zu sorgen.

Die Feder-/Dämpfungselemente 38 bestehen aus demselben thermoplastischen Elastomer wie der Softgrip 24 auf der Außenseite des Griffteils 8 und werden bei der Fertigung des Gehäuses 6 zeitgleich mit diesem am Griffteil 8 angespritzt und dadurch einstückig mit dem Gehäuse 6 verbunden. Um einen sicheren Sitz der Feder-/Dämpfungselemente 38 zu gewährleisten, kann eine mit den Feder-/Dämpfungselementen 38 versehene Innenwand 40 des Gehäuses 6 im Montagebereich jedes Feder-/Dämpfungselements 38 mit einer Durchtrittsöffnung (nicht dargestellt) versehen werden, deren Abmessungen kleiner als die Abmessungen des Feder-/Dämpfungselements 38 beiderseits der Durchtrittsöffnung sind, so dass das Feder-/Dämpfungselement 38 formschlüssig in der Öffnung festgehalten wird.

Bei dem in der Zeichnung dargestellten Schlagbohrschrauber 2 sind die Feder-/Dämpfungselemente 38 so angebracht, dass sie sich nach einem Verrasten des Akkupacks 4 mit dem Gehäuse 6 des Schlagbohrschraubers 2 gegen vier paarweise entgegengesetzte Oberflächen 42 der Verrastungsvorrichtung 26 abstützen, die den paarweise angeordneten Feder-/Dämpfungselementen 38 gegenüberliegen. Die Oberflächen 42 der Verrastungsvorrichtung 26 und die freien, dagegen anliegenden Stirnenden 44 der Feder-/Dämpfungselemente 38 sind so ausgerichtet, dass sie senkrecht zu einer Bohrachse 46 des Schlagbohrschraubers 2 und damit senkrecht zu einer beim Schlagbohren auftretenden Hauptschwingungsrichtung P des Gehäuses 6 ausgerichtet sind. Dadurch wird die in dieser Richtung auf die Feder-/Dämpfungselemente 38 aufgebrachte Vibrationsenergie besonders gut abgebaut und zwischen dem Akkupack 4 und dem Gehäuse 6 Relativbewegungen mit großer Schwingungsamplitude verhindert.

Wie man aus Figur 2 sehen kann, sind die Anlageflächen 44 der Feder-/Dämpfungselemente 38 auch im Wesentlichen senkrecht zu der Richtung R angeordnet, in der die vier Rastelemente 30 der Verrastungsvorrichtung 26 beim Einführen in die Einsteckbuchse 34 ausweichen.

Im Vergleich zu den angrenzenden Teilen des Gehäuses 6 stehen die Feder-/Dämpfungselemente 38 geringfügig ins Innere der Einsteckbuchse 34 über, so dass sie das Einführen der Verrastungsvorrichtung 26 in die Einsteckbuchse 34 nicht behindern, jedoch nach dem Verrasten im Wesentlichen ohne Spiel gegen die Oberflächen 42 der Verrastungsvorrichtung 26 anliegen.

Um das Einführen der Verrastungsvorrichtung 26 in die Einsteckbuchse 34 zu erleichtern, sind die Oberflächen 42 mit zunehmendem Abstand von der Oberseite des Akkupacks 4 von dessen äußeren Stirnseitenflächen 48 weg gerundet, was auch das Einführen der Oberflächen 42 zwischen die sich paarweise im Abstand gegenüberliegenden Feder-/Dämpfungselemente 38 erleichtert.

## Patentansprüche

1. Handwerkzeugmaschine mit einem Gehäuse, einem im Gehäuse untergebrachten Elektromotor und einem lösbar mit dem Gehäuse verrasteten Akkupack zur Speisung des Elektromotors mit elektrischem Strom, sowie mindestens zwei zwischen dem Akkupack (4) und dem Gehäuse (6) der Handwerkzeugmaschine (2) angebrachten Feder-/Dämpfungselementen (38) zur Dämpfung von Vibrationen und zur Beseitigung eines verrastungsbedingten Spiels zwischen dem Akkupack (4) und dem Gehäuse (6), **dadurch gekennzeichnet, dass** die Feder-/Dämpfungselemente (38) mit paarweise entgegengesetzten, im Wesentlichen senkrecht zu einer Hauptschwingungsrichtung (P) der Handwerkzeugmaschine ausgerichteten Oberflächen (42) einer zur Verrastung des Akkupacks (4) mit dem Gehäuse (6) dienenden Verrastungsvorrichtung (26) in Berührungseingriff treten.

2. Handwerkzeugmaschine nach Anspruch 1, **dadurch gekennzeichnet, dass** mindestens ein Feder-/Dämpfungselement (38) am Gehäuse (6) befestigt ist und beim Verrasten von Akkupack (4) und Gehäuse (6) mit dem Akkupack (4) in Berührungseingriff tritt.

3. Handwerkzeugmaschine nach Anspruch 1, **dadurch gekennzeichnet, dass** mindestens ein Feder-/Dämpfungselement am Akkupack befestigt ist und beim Verrasten von Akkupack und Gehäuse mit dem Gehäuse in Berührungseingriff tritt.

4. Handwerkzeugmaschine nach einem der vorangehenden Ansprüche, **dadurch gekennzeichnet, dass** die Oberfläche (42) in Bewegungsrichtung beim Verrasten geneigt oder gerundet ist.

5. Handwerkzeugmaschine nach einem der vorangehenden Ansprüche, **dadurch gekennzeichnet, dass** die Feder-/Dämpfungselemente (38) in einer Richtung verformbar sind, die einer Hauptschwingungsrichtung (P) der Handwerkzeugmaschine entspricht.

6. Handwerkzeugmaschine nach einem der vorangehenden Ansprüche, **dadurch gekennzeichnet, dass** die Feder-/Dämpfungselemente (38) in einer Richtung verformbar sind, die zu einer Richtung (R) eines Ausweichens von Rastelementen (32) beim Verrasten von Akkupack (4) und Gehäuse (6) senkrecht ist.

7. Handwerkzeugmaschine nach einem der vorangehenden Ansprüche, **dadurch gekennzeichnet, dass** die Feder-/Dämpfungselemente (38) aus einem gummielastischen Material bestehen.

8. Handwerkzeugmaschine nach einem der vorangehenden Ansprüche, **dadurch gekennzeichnet, dass** die Feder-/Dämpfungselemente (38) aus einem durch Spritzgießen einstückig mit dem Gehäuse (6) verbindbaren Material bestehen.

9. Handwerkzeugmaschine nach einem der vorangehenden Ansprüche, **dadurch gekennzeichnet, dass** die Feder-/Dämpfungselemente (38) aus einem thermoplastischen Elastomer bestehen.

10. Handwerkzeugmaschine nach einem der vorangehenden Ansprüche, **dadurch gekennzeichnet, dass** die Feder-/Dämpfungselemente (38) am Gehäuse (6) oder am Akkupack (4) angeformt sind.

11. Handwerkzeugmaschine nach einem der vorangehenden Ansprüche, **dadurch gekennzeichnet, dass** mehrere Feder-/Dämpfungselemente (38) im Abstand voneinander angeordnet sind.

12. Handwerkzeugmaschine nach einem der vorangehenden Ansprüche, **dadurch gekennzeichnet, dass** die Feder-/Dämpfungselemente aus einem Federelement und einem Dämpfungselement bestehen.

## Claims

1. Hand-held power tool comprising a housing, an electric motor which is accommodated in the housing, and a battery pack which is locked to the housing in a detachable manner and serves to feed electrical power to the electric motor, and also at least two spring/damping elements (38) which are fitted between the battery pack (4) and the housing (6) of the hand-held power tool (2) and serve to damp vibrations and to eliminate locking-induced play between the battery pack (4) and the housing (6), **characterized in that** the spring/damping elements (38) come into touching engagement with surfaces (42) of a locking apparatus (26) which serves to lock the battery pack (4) to the housing (6), which surfaces (42) oppose one another in pairs and are oriented substantially perpendicular to a main vibration direction (P) of the hand-held power tool.

2. Hand-held power tool according to Claim 1, **characterized in that** at least one spring/damping element (38) is fixed to the housing (6) and comes into touching engagement with the battery pack (4) when the battery pack (4) and the housing (6) are locked to one another.

3. Hand-held power tool according to Claim 1, **characterized in that** at least one spring/damping element is fixed to the battery pack and comes into touching engagement with the housing when the battery pack and the housing are locked to one another.

4. Hand-held power tool according to one of the preceding claims, **characterized in that** the surface (42) is inclined or rounded in the movement direction during locking.

5. Hand-held power tool according to one of the preceding claims, **characterized in that** the spring/damping elements (38) can be deformed in a direction which corresponds to a main vibration direction (P) of the hand-held power tool.

6. Hand-held power tool according to one of the preceding claims, **characterized in that** the spring/damping elements (38) can be deformed in a direction which is perpendicular to a direction (R) of deflection of locking elements (32) when the battery pack (4) and the housing (6) are locked to one another.

7. Hand-held power tool according to one of the preceding claims, **characterized in that** the spring/damping elements (38) are composed of an elastomeric material.

8. Hand-held power tool according to one of the preceding claims, **characterized in that** the spring/damping elements (38) are composed of a material which can be integrally connected to the housing (6) by injection moulding.

9. Hand-held power tool according to one of the preceding claims, **characterized in that** the spring/damping elements (38) are composed of a thermoplastic elastomer.

10. Hand-held power tool according to one of the preceding claims, **characterized in that** the spring/damping elements (38) are integrally formed on the housing (6) or on the battery pack (4).

11. Hand-held power tool according to one of the preceding claims, **characterized in that** a plurality of spring/damping elements (38) are arranged at a distance from one another.

12. Hand-held power tool according to one of the preceding claims, **characterized in that** the spring/damping elements comprise a spring element and a damping element.

## Revendications

1. Machine-outil portative comprenant un boîtier, un moteur électrique logé dans le boîtier et un bloc batterie enclenché de façon amovible sur le boîtier pour alimenter le moteur électrique en courant électrique, ainsi qu'au moins deux éléments de ressort/d'amortissement (38) situés entre le bloc batterie (4) et le boîtier (6) de la machine-outil (2) pour amortir des vibrations et supprimer un jeu dû à l'enclenchement entre le bloc batterie (4) et le boîtier (6),
**caractérisée en ce que**
les éléments de ressort/d'amortissement (38) entrent en contact avec des surfaces (42) d'un dispositif d'enclenchement (26) du bloc batterie (4) avec le boîtier (6), orientées par paires opposées pour l'essentiel perpendiculairement à une direction d'oscillation principale (P) de la machine-outil portative.

2. Machine-outil portative selon la revendication 1,
**caractérisée en ce qu'**
au moins un élément de ressort/d'amortissement (38) est fixé au boîtier (6) et entre en contact avec le bloc batterie (4) lors de l'enclenchement du bloc batterie (4) et du boîtier (6).

3. Machine-outil portative selon la revendication 1,
**caractérisée en ce qu'**
au moins un élément de ressort/ d'amortissement est fixé au bloc batterie et entre en contact avec le boîtier lors de l'enclenchement du bloc batterie et du boîtier.

4. Machine-outil portative selon l'une quelconque des revendications précédentes,
**caractérisée en ce que**
lors de l'enclenchement, la surface (42) est inclinée ou arrondie dans la direction du mouvement.

5. Machine-outil portative selon l'une quelconque des revendications précédentes,
**caractérisée en ce que**
les éléments de ressort/d'amortissement (38) sont déformables dans une direction qui correspond à une direction d'oscillation principale (P) de la machine-outil manuelle.

6. Machine-outil portative selon l'une quelconque des revendications précédentes,
**caractérisée en ce que**
les éléments de ressort/d'amortissement (38) sont déformables dans une direction perpendiculaire à une direction (R) de déplacement d'éléments d'enclenchement (32) lors de l'enclenchement du bloc batterie (4) et du boîtier (6).

7. Machine-outil portative selon l'une quelconque des revendications précédentes,
**caractérisée en ce que**
les éléments de ressort/d'amortissement (38) sont réalisés à partir d'un matériau de caoutchouc élastique.

8. Machine-outil portative selon l'une quelconque des revendications précédentes,
**caractérisée en ce que**
les éléments de ressort/d'amortissement (38) sont réalisés à partir d'un matériau pouvant être relié d'un seul tenant au boîtier (6) par moulage par injection.

9. Machine-outil portative selon l'une quelconque des revendications précédentes,
**caractérisée en ce que**
les éléments de ressort/d'amortissement (38) sont réalisés à partir d'un élastomère thermoplastique.

10. Machine-outil portative selon l'une quelconque des revendications précédentes,
**caractérisée en ce que**
les éléments de ressort/d'amortissement (38) sont rapportés par moulage sur le boîtier (6) ou le bloc batterie (4).

11. Machine-outil portative selon l'une quelconque des revendications précédentes,
**caractérisée par**
plusieurs éléments de ressort/d'amortissement (38) écartée les uns des autres.

12. Machine-outil portative selon l'une quelconque des revendications précédentes,
**caractérisée en ce que**
les éléments de ressort/d'amortissement sont composés d'un élément de ressort et d'un élément d'amortissement.
